# EUROPEAN PATENT SPECIFICATION

(11) **EP 0 906 723 B1**
(45) Date of publication and mention of the grant of the patent: **02.01.2002**
(21) Application number: 98118880.8
(22) Date of filing: 06.10.1998
(51) Int. Cl.: A01K 15/02, B29C 45/14

(54) **Dog toy**
Spielzeug für Hunde
Jouet pour chiens

(30) Priority: 06.10.1997 US 77473; 20.01.1998 US 10045 P
(43) Date of publication of application: 07.04.1999
(73) Proprietor: Farnam Companies, Inc., Phoenix, AZ 85013-3928 (US)
(72) Inventor: Huettner, Mark E., Cave Creek,Arizona 85331 (US)
(74) Representative: Wächtershäuser, Günter, Prof. Dr.

(56) References cited:
- BE-A- 869 106
- GB-A- 495 652
- US-A- 3 104 648
- US-A- 3 731 926
- US-A- 4 133 296
- US-A- 5 191 856

## Description

The present invention relates to a toy. In particular, the present invention relates to a dog toy.

US-A-3,104,648 and US-A-5,191,856 disclose an animal toy in the shape of a dumbbell. US-A-4,133,296 discloses a canvas toy for an animal.

A dumbbell-shaped dog toy is provided which has two end portions formed by tennis balls. The tennis balls are connected by a supporting bar. At both ends of the bar, cups may be provided wherein the tennis balls are incorporated.

In the following, the dog toy will be described with reference to drawings.
- Fig. 1: is a top, front and left perspective view of a toy for dogs according to the invention;
- Fig. 2: is a top plan view of Fig. 1 with bottom view being a mirror image thereof;
- Fig. 3: is a front plan view thereof with the bottom view being a mirror image thereof;
- Fig. 4: is a right end elevational view thereof; and
- Fig. 5: is a left end elevational view thereof.

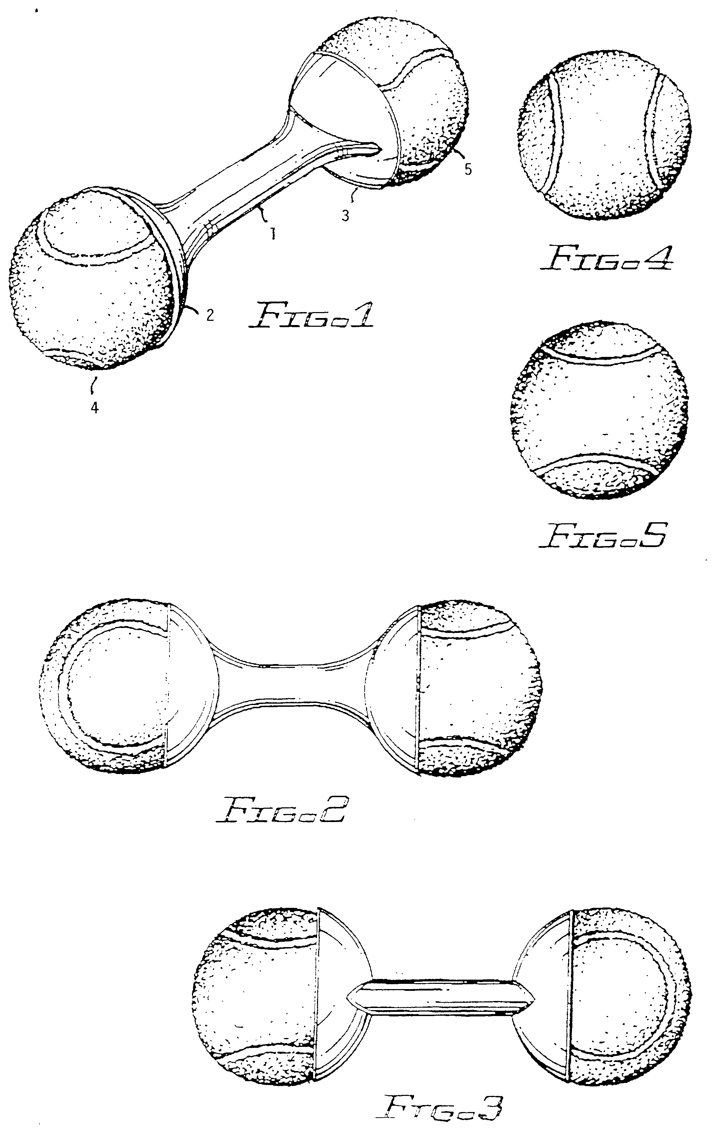

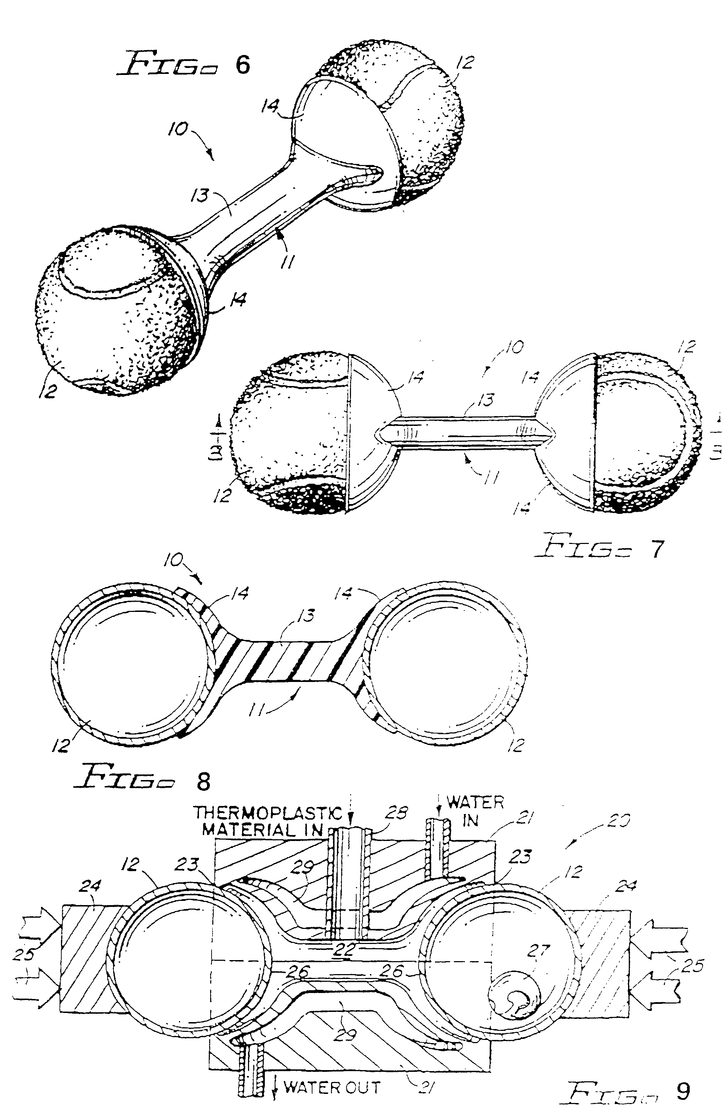

The dumbbell-shaped dog toy shown in Figs. 1 to 5 comprises a bar 1 having at both ends a cup 2, 3, respectively. In each of the cups, a tennis ball is incorporated and bonded thereto. Preferably, the tennis balls are provided such that the top plan view according to Fig. 2 is the mirror image of the front plan view of Fig 3. Bar 1 may be flat. Generally, the dumbbell-shaped dog toy resembles a bone.

The dog toy offers the following advantages in combination:
(1) The dog toy has the shape of a bone.
(2) The soft tennis balls are chewing objects which are popular with dogs.
(3) The tennis balls may be replaced, if necessary.
(4) The dog toy cannot be swallowed due to its size even by big dogs.
(5) Two dogs can play with it at the same time.
(6) The dog toy may be used as a fetching object.
(7) The dog toy may be easily taken out of the dogs mouth.
(8) The dog toy shows exciting rotation and wobbleing movements when thrown.
(9) The dog toy bounces unpredictably.
(10) The dog toy reaches quickly its rest position without much rolling.
(11) The dog toy floats on water.

The tennis balls may be colored or fluorescent. The bar may be made of plastic and it may be suitably coated, colored and/or perfumed.

This invention also relates to thermoplastic dog toys incorporating tennis balls comprising flexible, hollow objects which may or may not be pressurized and to a molding process for producing such dog toys. An important characteristic of the new and novel process is its capability for bonding tennis balls comprising hollow, flexible objects to the thermoplastic body of a dog toy.

Various types of molded thermoplastic products are known which incorporate different types of separately fabricated objects. Some such incorporated objects are secured to the thermoplastic body by adhesives such as urethanes, cyanoacrylates etc. Other non-plastic, non-pressurized, solid objects are sometimes inserted into an injection mold in a manner which allows the molten plastic to flow around a portion of the object, thereby trapping the object and holding it in place in the product. The use of adhesives for bonding is generally undesirable because of environmental concerns, and the entrapment method is often not a practical approach as it limits design configurations.

The molding and bonding method of the present invention is not known in the prior art as a means for securing flexible, hollow objects to a thermoplastic body.

This invention relates to a molding and bonding process for incorporating tennis balls comprising hollow, flexible objects such as tennis balls in an injection molded thermoplastic body and to products produced by the process.

it is, therefore, one object of this invention to provide a new and improved process for incorporating tennis balls comprising hollow, flexible objects in a molded plastic body.

Another object of this invention is to provide such a new and improved process which causes the tennis balls comprising hollow, flexible objects to adhere reliably to the plastic body without the use of adhesives and without the use of entrapment as a securing means.

A further object of this invention is to provide such a new and improved molding and bonding process which achieves the desired bonding action simultaneously and along with the same injection molding operation that forms the molded body.

A still further object of this invention is to provide such a new and improved molding and bonding process which will reliably bonds a tennis ball to a thermoplastic body.

A still further object of this invention is to provide a novel toy for a dog through the use of the improved molding and bonding method of this invention.

Further objects and advantages of the invention will become apparent as the following description proceeds and the features of novelty which characterize the invention will be pointed out with particularity in the claims annexed to and forming a part of this specification.

The present invention may be more readily described by reference to the accompanying drawing, in which:
- Fig. 6: is a perspective view of a product in the form of a toy for a dog, the toy having been produced by the molding and bonding process of this invention;
- Fig. 7: is a front plan view of Fig. 1;
- Fig. 8: is a cross-section view of Fig. 2 taken along line 3-3; and
- Fig. 9: is a cross-section view showing the product of Figs. 1-3 being formed in a mold in accordance with the improved molding and bonding process of the invention.

Referring more particularly to the drawing by characters of reference, Figs. 1-3 disclose a toy 10 for a dog, the toy being representative of the type of product that can be made using the molding and bonding process of this invention.

As shown in the drawing, toy 10 comprises a central supporting bar 11 with a tennis ball 12 secured at each end thereof, the overall configuration taking the appearance of a bone with a joint at each end.

Bar 11, which is made of a tough, non-brittle, elastomeric, thermoplastic material, has a central span 13 with a cross-section approximating a flattened oval. Each end of span 13 terminates in a cup 14, the cup and attached span 13 resembling a shallow champagne glass and its stem, Cup 14 has an inside spherical surface matching that of tennis ball 12 so that the tennis ball fits snugly inside the cup as shown more clearly in Fig. 8.

Toy 10 is intended for use as an object to be retrieved or "fetched" by a dog. A dog that has learned to fetch a ball will readily fetch this toy and may be trained to grab bar 11 rather than one of the tennis balls, leaving the tennis balls free of dog saliva for the dog's master to grasp. The incorporation of tennis balls in the toy results in a lively toy that bounces when it is thrown and will float when thrown in a pool or lake thereby attracting the dog and adding excitement to the fetching game.

The process by which toy 10 is made in accordance with the improved molding and bonding process of this invention is illustrated by the simplified diagram of Fig. 9.

Fig. 9 is a cross-sectional representation showing a molding apparatus 20 which is employed in the fabrication of a toy 10. As shown, the two tennis balls 12 are already in place for the molding process. The cross-section of Fig. 9 is taken in the vicinity of the parting plane of the mold.

As shown in Fig. 9, a temperature controlled mold 21 encloses a cavity 22 into which the molten thermoplastic material is to be injected. Mold 21 encloses the surfaces of cavity 22 that correspond with the surfaces of bar 11 which are exposed in the final product, Circular openings 23 at the left and right ends of the mold (as shown in Fig. 9) are filled by the tennis balls 12. The tennis balls are held firmly in place against openings 23 by pressure blocks 24, the pressure blocks being urged in the direction of arrows 25.

With cavity 22 completely enclosed, a molten thermoplastic material, preferably a thermoplastic polyurethane elastomer with a durometer between 83A and 90A, is injected through plastic input tubes 28 into the temperature controlled mold through water chamber 29. As cavity 22 is filled, the molten thermoplastic material penetrates the fibrous covering 26 of tennis balls 12, completely enveloping the fibers and bonding to the fibers as well as to the flexible elastic body of the tennis balls to which the fibrous covering is bonded.

Upon completion of the injection procedure, the injected material is allowed to cool and solidify. The mold is then opened and the finished product is removed.

In accordance with the stated objects of the invention, a single-process molding and bonding operation is thus provided, the bonding being accomplished without the use of adhesives or bodily entrapment of incorporated parts.

It should be noted that the tennis ball may contain a movable object such as a bell 27 in its hollow interior for producing a noise to excite the dog.

Furthermore, the product according to the invention may be used as a toy for children, or for therapeutic purposes.

## Claims

1. A dumbbell-shaped dog toy (10) having two end portions formed by tennis balls (12).

2. A method for producing a dumbbell-shaped dog toy according to claim 1 comprising tennis balls (12) incorporated in and bonded to an injection molded thermoplastic body, the method comprising the steps of:
- clamping said tennis balls (12) against one or more strategically placed openings in a temperature controlled mold (21) such that the portion of said tennis ball's surface that is to be bonded forms a part of the inner surface of the mold and is exposed to the injected thermoplastic material,
- injecting a molten thermoplastic material into the mold (21),
- allowing the thermoplastic material to cool and solidify; opening the mold (21), and
- removing the finished dumbbell-shaped dog toy (10).

3. The method set forth in claim 2 wherein said tennis balls (12) comprise hollow flexible internally pressurizable objects.

4. The method set forth in claim 2 wherein:
- said thermoplastic material is a thermoplastic polyurethane elastomer with a durometer between 83A and 90A.

5. The method set forth in claim 3 wherein,
said hollow flexible internally pressurizable objects have fibrous outer surfaces which absorb the molten thermoplastic material and enhance the bonding action.

6. The method set forth in claim 3 wherein:
- said temperature controlled mold (21) forms the exposed surfaces of the thermoplastic body of the finished dumbbell-shaped dog toy (10),
- said strategically placed openings allow said molten thermoplastic material to flow over those surfaces of said hollow flexible internally pressurizable objects which are intended to be bonded to said thermoplastic body, and
- said thermoplastic material bonds to said exposed surfaces of said hollow flexible internally pressurizable objects as said thermoplastic material cools and solidifies.

7. The dumbbell-shaped dog toy (10) produced according to any one of claims 2 to 6, wherein the dog toy (10) comprises a thermoplastic body comprising a central supporting bar (1;11) with cups (2,3;14) at both ends for receiving and bonding to said two tennis balls (12), said toy being intended for use as an object to be retrieved by a dog.

8. The toy (10) set forth in claim 7 in further combination with a noise maker loosely contained within one of the tennis balls.

9. Use of a toy (10) set forth in claim 8 as a toy for children.

## Patentansprüche

1. Hantelförmiges Spielzeug für Hunde (10) mit zwei von Tennisbällen (12) gebildeten Endstücken.

2. Verfahren zur Herstellung eines hanteiförmigen Spielzeugs für Hunde gemäß Anspruch 1, das Tennisbälle (12) enthält, die in einen thermoplastischen Spritzgusskörper eingefügt und an diesen befestigt sind, wobei das Verfahren die folgenden Schritte umfasst:
- Anklemmen der Tennisbälle (12) gegen eine oder mehrere geeignet angeordnete Öffnungen in einer temperaturkontrollierten Form (21), so dass der Oberflächenbereich der Tennisbälle, der befestigt werden soll, einen Teil der inneren Oberfläche der Form bildet und dem eingespritzten thermoplastischen Material ausgesetzt ist,
- Einspritzen eines geschmolzenen thermoplastischen Materials in die Form (21),
- Abkühlen und Erhärten des thermoplastischen Materials, Öffnen der Form (21) und
- Entnehmen des fertigen hantelförmigen Spielzeugs für Hunde (10).

3. Das Verfahren gemäß Anspruch 2, wobei die Tennisbälle (12) hohle, flexible, intern unter Druck setzbare Objekte umfassen.

4. Das Verfahren gemäß Anspruch 2, wobei das thermoplastische Material ein thermoplastisches Polyurethanelastomer mit einem Härtegrad (Durometer) zwischen 83 A und 90 A ist.

5. Das Verfahren gemäß Anspruch 3, wobei die hohlen, flexiblen, intern unter Druck setzbaren Objekte fasrige äußere Oberflächen haben, die das geschmolzene thermoplastische Material aufnehmen und die Bindungswirkung verstärken.

6. Das Verfahren gemäß Anspruch 3, wobei
- die temperaturkontrollierte Form (21) die äußere Oberfläche des thermoplastischen Körpers des fertigen hantelförmigen Spielzeugs für Hunde ausbildet,
- die geeignet angeordneten Öffnungen dem geschmolzenen thermoplastischen Material erlauben, über die Oberflächen der hohlen, flexiblen, intem unter Druck setzbaren Objekte zu fließen, die an dem thermoplastischen Körper befestigt werden sollen, und
- das thermoplastische Material die exponierten Oberflächen der hohlen, flexiblen, intern unter Druck setzbaren Objekte befestigt, wenn das thermoplastische Material abkühlt und erhärtet.

7. Das gemäß eines der Ansprüche 2 bis 6 hergestellte hantelförmige Spielzeug für Hunde (10), das einen thermoplastischen Körper aufweist umfassend ein zentrales Querstück (1; 11) mit Pfannen (2, 3; 14) an beiden Enden zur Aufnahme und Befestigung der beiden Tennisbälle (12), wobei das Spielzeug zur Verwendung als Apportiergegenstand für einen Hund gedacht ist.

8. Das Spielzeug (10) gemäß Anspruch 7 in Kombination mit einem Geräuschmacher enthalten in einem der Tennisbälle.

9. Verwendung des Spielzeugs (10) gemäß Anspruch 8 als Spielzeug für Kinder.

## Revendications

1. Jouet pour chiens en forme d'haltère (10) comprenant deux parties d'extrémité formées par des balles de tennis (12).

2. Méthode pour produire un jouet pour chiens en forme d'haltère selon la revendication 1 comprenant des balles de tennis (12) intégrées et collées à un corps en thermoplastique moulé par injection, cette méthode consistant :
- à serrer les balles de tennis (12) contre une ou plusieurs ouvertures placées stratégiquement dans un moule à température contrôlée (21) de telle sorte que la partie de la surface des balles de tennis qui doit être collée forme une partie de la surface intérieure du moule et soit exposée au matériau thermoplastique injecté,
- à injecter dans le moule (21) un matériau thermoplastique fondu,
- à permettre au matériau thermoplastique de refroidir et de se solidifier ;
- à ouvrir le moule (21), et
- à enlever le jouet pour chiens en forme d'haltère (10) fini.

3. Méthode selon la revendication 2, selon laquelle les balles de tennis (12) contiennent des objets flexibles creux aptes à être mis sous pression, à l'intérieur.

4. Méthode selon la revendication 2, selon laquelle:
- le matériau thermoplastique est un élastomère polyuréthanne thermoplastique avec une dureté située entre 83A et 90A.

5. Méthode selon la revendication 3, selon laquelle les objets flexibles creux aptes à être mis sous pression, à l'intérieur, ont des surfaces extérieures fibreuses qui absorbent le matériau thermoplastique fondu et qui favorisent l'action de collage.

6. Méthode selon la revendication 3, selon laquelle:
- le moule à température contrôlée (21) forme les surfaces exposées du corps en thermoplastique du jouet pour chiens fini en forme d'haltère (10),
- les ouvertures placées stratégiquement permettent au matériau thermoplastique fondu de couler sur les surfaces des objets flexibles creux aptes à être mis sous pression, à l'intérieur, qui sont destinées à être collées au corps thermoplastique, et
- le matériau thermoplastique, en refroidissant et en se solidifiant, colle aux surfaces exposées desdits objets flexibles creux aptes à être mis sous pression, à l'intérieur.

7. Jouet pour chiens en forme d'haltère (10) produit selon l'une quelconque des revendications 2 à 6, qui comprend un corps en thermoplastique formé d'une tige de support centrale (1 ; 11) avec des coupelles (2, 3 ; 14), aux deux extrémités, qui sont destinées à recevoir deux balles de tennis (12) et à coller à celles-ci, le jouet étant destiné à être utilisé comme un objet à rapporter par un chien.

8. Jouet (10) selon la revendication 7, combiné avec un objet faisant du bruit contenu de manière lâche dans l'une des balles de tennis.

9. Utilisation d'un jouet (10) selon la revendication 8 comme jouet pour enfants.
